# FASCICULE DE BREVET EUROPEEN

(11) **EP 2 670 822 B1**
(45) Date de publication et mention de la délivrance du brevet: **27.04.2016**
(21) Numéro de dépôt: 12704858.5
(22) Date de dépôt: 10.01.2012
(51) Int. Cl.: C10G 45/40, C10G 45/52, B01J 23/48, B01J 23/50, B01J 23/52, B01J 23/60, B01J 23/89, C07C 5/05, B01J 35/10, B01J 23/72

(54) **CATALYSEUR THIORESISTANT, PROCEDE DE FABRICATION ET UTILISATION EN HYDROGENATION SELECTIVE**
SCHWEFELWIDERSTANDSFÄHIGER KATALYSATOR, HERSTELLUNGSVERFAHREN DAFÜR UND UND VERWENDUNG DIESES KATALYSATORS BEI SELEKTIVEN HYDRIERVERFAHREN
THIORESISTANT CATALYST, PRODUCTION METHOD AND USE THEREOF IN SELECTIVE HYDROGENATION

(30) Priorité: 31.01.2011 FR 1100288
(43) Date de publication de la demande: 11.12.2013
(73) Titulaire: IFP Énergies nouvelles, 92852 Rueil-Malmaison Cedex (FR)
(72) Inventeur: FECANT, Antoine, 69530 Brignais (FR)
(86) Numéro de dépôt international: PCT/FR2012/000017
(87) Numéro de publication internationale: WO 2012/104498

(56) Documents cités:
- EP-A1- 1 754 535
- EP-A1- 1 767 270
- WO-A1-03/080238
- WO-A2-02/081416
- US-A- 3 218 268
- US-A- 3 751 508
- US-A- 5 045 521
- US-A1- 2005 245 621

## Description

L'invention concerne des catalyseurs qui sont stables, sélectifs et résistants aux impuretés soufrées contenues dans les essences de pyrolyse. L'invention concerne aussi le procédé de préparation de ces catalyseurs et leurs utilisations dans l'hydrogénation sélective d'hydrocarbures comprenant des fonctions acétylèniques, dièniques et/ou alkénylaromatiques. L'invention s'applique au domaine du raffinage et plus particulièrement au traitement des essences obtenues par vapocraquage (essence de pyrolyse).
De part leur teneur élevée en hydrocarbures aromatiques, les essences de pyrolyse constituent un produit hautement valorisable dans le domaine des carburants ainsi que dans celui de la pétrochimie. Cependant, ces essences contiennent des quantités non négligeables de composés acétylèniques, dioléfiniques et des alkénylaromatiques, qui sont à l'origine de la formation de gommes dans les moteurs ou dans les installations de pétrochimie. Les composés acétylèniques, dioléfiniques et les alkénylaromatiques sont des composés poylinsaturés très réactifs qui polymèrisent très facilement. Il est donc indispensable de traiter les essences de pyrolyse avant leur utilisation comme carburant ou avant leur valorisation en pétrochimie. L'hydrogénation sélective est le principal traitement développé pour éliminer spécifiquement les composés polyinsaturés indésirables de ces essences. Elle permet la conversion des composés polyinsaturés vers les alcènes ou aromatiques correspondants en évitant leur saturation totale et donc la formation des alcanes linéaires et cycliques correspondants.

Les catalyseurs d'hydrogénation sélective sont généralement à base de métaux du groupe VIIIB du tableau périodique des éléments, de préférence le palladium ou le nickel. La phase active des catalyseurs se présente sous la forme de petites particules métalliques déposées sur un support. Le support peut être un oxyde réfractaire sous forme de billes, d'extrudés, de trilobes ou sous des formes présentant d'autres géométries. La teneur en métal, la taille des particules de métal et la répartition de la phase active dans le support font partie des critères qui ont une importance sur l'activité et la sélectivité de ces catalyseurs.

Les particules métalliques supportées peuvent posséder une taille moyenne comprise entre 1 et 5 nm. Cette taille est adaptée aux exigences des réactions d'hydrogénation sélective. En effet, la vitesse de réaction d'hydrogénation de molécules polyinsaturées telles que les dioléfines ou les acétyléniques dépend de la taille des particules métalliques. Ce résultat est généralement décrit sous le terme «sensibilité à la structure». Un optimum est généralement observé pour une taille de l'ordre de 3 à 4 nm, cette valeur pouvant varier en fonction notamment de la masse moléculaire des réactifs (M. Boudart, W.C. Cheng, J. Catal. 106, 1987, 134, S. Hub, L. Hilaire, R. Touroude, Appl. Catal. 36 1992, 307).

Les catalyseurs employés pour l'hydrogénation sélective sont soumis à une forte désactivation tout au long de leur cycle catalytique. Ceci est dû en partie à la formation d'oligomères mais également à la présence de contaminants tels que des composés soufrés. Ainsi, au cours de leur cycle les performances de catalyseurs diminuent de manière importantes et des étapes de réjuvénation ou de régénération sont indispensables pour qu'ils recouvrent l'activité et la sélectivité nécessaires pour atteindre les spécifications produits.

Des catalyseurs d'hydrogénation sélective résistants aux impuretés soufrées ont été développés. Le document FR2413127 enseigne que l'ajout d'un halogène dans la phase active d'un catalyseur contenant du palladium permet d'en améliorer les propriétés catalytiques lorsque la charge contient des impuretés soufrées. Le document FR2523149 décrit un catalyseur comprenant du palladium, de l'or sous forme métallique et une teneur réduite en halogène. Ce catalyseur a de bonnes propriétés catalytiques même si la charge contient des impuretés soufrées. Cependant, ces catalyseurs présentent de nombreux inconvénients. D'une part, la présence d'halogènes diminue l'activité hydrogénante de ces catalyseurs pour des charges ne contenant que très peu d'impuretés soufrées. D'autre part, la présence d'halogènes crée de l'acidité en surface du support du catalyseur, ce qui favorise les réactions parasites de type oligomérisation des composés poly-insaturés.

Le document WO 02/081416 décrit un catalyseur pour l'hydrogénation sélective d'acétylènes, ledit catalyseur comprenant une phase active déposée sur un support, ladite phase active comprenant palladium, 0.1 à 25 poids de cuivre et 0 à 25 poids d'oxyde de zinc; ledit support étant alumine ayant une surface spécifique moins de 230 m 2 /g. Le procédé de préparation montre que la phase active du catalyseur comprend du cuivre et du palladium sous leurs formes oxydes (après calcination) ou sous leur formes réduites (après activation).

Il existe donc toujours un besoin d'avoir des catalyseurs d'hydrogénation sélective qui soient résistants aux impuretés soufrées et qui présentent une bonne sélectivité.

L'objet de l'invention est de pallier les inconvénients de l'art antérieur en proposant un nouveau catalyseur d'hydrogénation thiorésistant et ayant des performances catalytiques améliorées par rapport aux catalyseurs de l'art antérieur. Le catalyseur thiorésistant selon l'invention comprend une phase active déposée sur un support, ladite phase active consistant en au moins un métal noble du groupe VIIIB sous forme réduite choisi parmi le platine ou le palladium et au moins 2 à 50 % poids d'un oxyde métallique du groupe IB ou du groupe IIB par rapport à la masse totale du catalyseur, ledit oxyde métallique étant choisi dans le groupe formé par l'oxyde de cuivre, l'oxyde de zinc et l'oxyde de cadmium, ledit support étant choisi parmi le groupe formé par les oxydes réfractaires, le charbon, les argiles, la silice-alumine et/ou leurs mélanges, et ledit support ayant une surface spécifique comprise entre 110 et 300 m²/g. Le catalyseur selon l'invention est sélectif.

L'invention présente les avantages d'augmenter la durée de chaque cycle du catalyseur entre deux réjuvénations ou régénérations, et donc d'augmenter sa durée de vie. Les réactions parasites sont également diminuées.

Dans la suite, les groupes d'éléments chimiques sont donnés selon la classification CAS (CRC Handbook of Chemistry and Physics, éditeur CRC press, rédacteur en chef D.R. Lide , 81^{ème} édition, 2000-2001). Par exemple, le groupe IIB selon la classification CAS correspond aux métaux de la colonne 12 selon la nouvelle classification IUPAC.

La teneur massique en oxyde métallique de groupe IB ou IIB par rapport à la masse totale du catalyseur supporté final est comprise entre 2 et 50 % poids, de préférence entre 2,1% et 45% poids et de manière encore plus préférée et 2,5 et 30% poids.

L'oxyde métallique du groupe IB ou IIB est choisi dans le groupe formé par l'oxyde de cuivre, l'oxyde de zinc et l'oxyde de cadmium. De manière préférée, l'oxyde métallique est choisi dans le groupe formé par l'oxyde de cuivre et l'oxyde de zinc. De manière très préférée, l'oxyde métallique est l'oxyde de zinc. De manière encore plus préférée, l'oxyde métallique est l'oxyde de cuivre.

La teneur massique du métal noble du groupe VIIIB par rapport à la masse totale du catalyseur supporté final est comprise entre 0,01 et 2% poids, de préférence entre 0,05 et 1% poids.

Le métal noble du groupe VIIIB est choisi parmi le platine ou le palladium. De manière encore plus préférée, le métal noble du groupe VIIIB est le palladium.

De manière préférée, lorsque le support est un oxyde réfractaire, il est choisi dans le groupe formé par les oxydes de magnésium, d'aluminium, de silicium, de zirconium, de thorium, de titane et/ou leurs mélanges.

Le catalyseur de l'invention peut être obtenu par le procédé de préparation suivant qui constitue un autre objet de l'invention. Le procédé de fabrication du catalyseur comprenant les étapes suivantes :
1) préparation d'une solution aqueuse d'un précurseur d'un oxyde métallique d'un métal du groupe IB ou IIB, ledit précurseur étant sous forme ionique,
2) incorporation de ladite solution obtenue à l'étape précédente sur un support choisi parmi le groupe formé par parmi le groupe formé par les oxydes réfractaires, le charbon, les argiles, la silice-alumine, et/ou leurs mélanges,
3) séchage et calcination du support promu obtenu à l'étape précédente,
4) préparation d'une solution aqueuse d'un précurseur de métal noble du groupe VIIIB,
5) incorporation de ladite solution d'un précurseur de métal noble du groupe VIIIB sur le support promu, séché et calciné,
6) séchage, calcination du support obtenu à l'étape précédente,
7) réduction du catalyseur obtenu à l'étape (6), ladite étape de réduction étant effectuée in situ en présence d'un gaz réducteur et à une température comprise entre 80°C et 160°C.

Le précurseur d'oxyde métallique du métal du groupe IB ou IIB est sous forme ionique. L'élément métallique de ce précurseur a un degré d'oxydation 2 et est associé à un contre-ion choisi parmi le groupe formé par les acétates, les hydroxydes, les nitrates, les sulfates, les acétylacétonates, les oxalates et les carbonates.

De manière préférée, le précurseur de l'oxyde métallique d'un métal du groupe IB ou IIB est choisi parmi l'acétate de zinc, l'acétylacétonate de zinc, l'hydroxyde de zinc, le nitrate de zinc, l'oxalate de zinc, le sulfate de zinc, l'acétate de cuivre, l'acétylacétonate de cuivre, le carbonate de cuivre, l'hydroxyde de cuivre, le nitrate de cuivre, le sulfate de cuivre, l'acétate de cadmium, l'acétylacétonate de cadmium, le carbonate de cadmium, l'hydroxyde de cadmium, le nitrate de cadmium et le sulfate de cadmium.

De manière préférée, l'oxyde métallique est l'oxyde de cuivre et le précurseur de l'oxyde de cuivre est choisi parmi le groupe formé par l'acétate de cuivre, l'acétylacétonate de cuivre, le carbonate de cuivre, l'hydroxyde de cuivre, le nitrate de cuivre et le sulfate de cuivre. De manière très préférée, le précurseur de l'oxyde de cuivre est le nitrate de cuivre.

De manière préférée, l'oxyde métallique est l'oxyde de zinc et le précurseur de l'oxyde de zinc est choisi parmi le groupe formé par l'acétate de zinc, l'acétylacétonate de zinc, l'hydroxyde de zinc, le nitrate de zinc, l'oxalate de zinc et le sulfate de zinc. De manière très préférée, le précurseur de l'oxyde de zinc est le nitrate de zinc.

La concentration de la solution aqueuse de précurseur d'oxyde métallique est ajustée selon la teneur massique en oxyde métallique désirée sur le catalyseur final. La teneur massique en oxyde métallique du groupe IB ou IIB par rapport à la masse totale du catalyseur supporté final se situe entre 2% et 50% poids, de préférence entre 2,1% et 40% poids, de manière très préférée entre 2,5% et 30% poids.

L'incorporation de la solution de précurseur d'oxyde métallique sur le support peut être réalisée par toutes techniques connues de l'homme du métier. De manière préférée, cette incorporation est réalisée par imprégnation à sec. L'imprégnation de la solution de précurseur d'oxyde métallique peut être réalisée en une ou plusieurs imprégnations successives.

Le support est choisi parmi le groupe formé par les oxydes réfractaires, les charbons, les argiles, la silice-alumine et/ou leurs mélanges. Par oxyde réfractaire, on entend au sens de la présente invention un oxyde qui présente de bonnes propriétés de résistance à l'attrition, à la chaleur et à l'écrasement. L'oxyde réfractaire peut être choisi dans le groupe formé par les oxydes de magnésium, d'aluminium, de silicium, de zirconium, de thorium, ou de titane, pris seul et/ou en mélange entre eux ou avec d'autres oxydes de la classification périodique. De préférence, le support est un oxyde d'aluminium (alumine) ou de silice. De préférence, le support présente une surface BET comprise entre 110 et 300 m²/g, de façon encore plus avantageuse entre 110 et 250 m²/g. Le volume poreux du support est compris entre 0,1 et 1,5 cm³/g. La surface spécifique BET est mesurée par physisorption à l'azote. Le volume poreux total est mesuré par porosimétrie au mercure selon la norme ASTM D4284-92 avec un angle de mouillage de 140°, par exemple au moyen d'un appareil modèle Autopore III de la marque Microméritics.

Le support peut être mis en forme de billes, d'extrudés, de trilobe de pastilles, d'agglomérats irréguliers et non sphériques dont la forme spécifique peut résulter d'une étape de concassage ou de monolithe. De manière avantageuse, ledit support se présente sous forme de billes ou d'extrudés.

Le support promu est séché afin d'éliminer toute ou une partie de l'eau introduite lors de l'imprégnation, de préférence à une température comprise entre 50 et 250°C, de manière plus préférée entre 70°C et 200°C. Le séchage est effectué sous air, ou sous atmosphère inerte (azote par exemple).

Le support promu est ensuite calciné sous flux gazeux, de manière préférée sous air. La température de calcination est généralement comprise entre 150°C et 450°C, de préférence comprise entre environ 200°C et environ 400°C. La durée de calcination est généralement comprise entre 0,5 heures et 24 heures, de manière préférée de 1 heure à 12 heures. L'étape de calcination peut être opérée par palier de température, jusqu'à la température de consigne maximale définie.

Le précurseur d'un métal noble du groupe VIIIB est sous forme de sel et est sélectionné dans le groupe constitué par le nitrate de palladium, le sulfate de palladium l'acétate de palladium, l'acétylacétonate de palladium, le nitrate de platine, le sulfate de platine, l'acétate de platine et l'acétylacétonate de platine. De manière préférée, lorsque le métal du groupe VIIIB est le palladium, le sel précurseur du palladium est le nitrate de palladium. La concentration de la solution aqueuse de précurseur de palladium est ajustée selon la teneur massique en palladium voulue sur le catalyseur supporté final. Ledit précurseur d'un métal noble du groupe VIIIB peut être dissout dans une solution aqueuse en présence ou non d'une base minérale. Ainsi dans une variante du procédé selon l'invention, la solution de précurseur du métal noble du groupe VIIIB peut être neutralisée par une base minérale sélectionnée parmi le groupe formé par les hydroxydes d'alcalins et les hydroxydes d'alcalino-terreux. Cette variante permet de former une suspension colloïdale de particules d'oxyde de métal noble du groupe VIIIB. De manière préférée, la base minérale est l'hydroxyde sodium.

Quelle que soit la variante du procédé, la teneur massique en palladium par rapport à la masse totale du catalyseur supporté final se situe entre 0,01 et 2% poids, de préférence entre 0,05 et 1% poids.

L'incorporation de la solution aqueuse de précurseur d'un métal noble du groupe VIIIB sur le support promu est réalisée par toute technique connue de l'homme du métier. De préférence, l'incorporation s'effectue par une imprégnation à sec. L'imprégnation de la solution de précurseur de d'un métal noble du groupe VIIIB peut être réalisée en une ou plusieurs imprégnations successives.

Le support doublement imprégné par un précurseur d'un oxyde métallique du groupe IB ou IIB et un précurseur d'un métal noble du groupe VIIIB est séché afin d'éliminer toute ou partie de l'eau introduite lors de l'imprégnation, de préférence à une température comprise entre 50 et 250°C, de manière plus préférée entre 70°C et 200°C. Le séchage est effectué sous air, ou sous atmosphère inerte (azote par exemple).

Puis, le support doublement promu et séché est ensuite calciné sous flux gazeux, de manière préférée sous air, sous hydrogène, sous azote ou un mélange d'au moins deux de ces gaz pour obtenir un catalyseur. La température de calcination est généralement comprise entre 150°C et 450°C, de préférence comprise entre environ 200°C et environ 400°C. La durée de calcination est généralement comprise entre 0,5 heures et 24 heures, de manière préférée de 1 heure à 12 heures. L'étape de calcination peut être opérée par palier de température, jusqu'à la température de consigne maximale définie.

Le catalyseur est ensuite réduit dans des conditions douces. Cette étape est réalisée en présence d'un gaz réducteur in situ, c'est-à-dire dans le réacteur où est réalisée la transformation catalytique, comprenant entre 25 vol% et 100 vol% d'hydrogène, de préférence 100 vol% d'hydrogène. Cette étape est effectuée à une température comprise entre 80°C et 160°C. Cette étape permet de réduire sélectivement l'oxyde de métal noble du groupe VIII sous sa forme métallique et de laisser quasi intact l'oxyde de métal du groupe IB ou IIB. On obtient ainsi un catalyseur dont la phase active est un mélange d'un métal noble du groupe VIIIB et d'un oxyde métallique du groupe IB ou IIB.

Le procédé de l'invention permet d'obtenir un catalyseur dont la phase active est constituée de deux métaux qui sont sous une forme métallique distincte. Le métal noble du groupe VIIIB est sous forme réduite et le métal du groupe IB ou IIB est sous sa forme oxyde. Ces deux formes coexistent au sein du volume poreux du support. Les étapes successives d'imprégnation du précurseur du métal noble du groupe VIIIB et du précurseur de l'oxyde métallique du groupe IB ou IIB, suivies de séchage et de calcination permettent d'éviter la formation d'alliage métallique VIIIB avec l'oxyde métallique du groupe IB ou IIB. La demanderesse a constaté que l'affinité des impuretés soufrées est supérieure pour l'oxyde du métal du groupe IB ou IIB que pour le métal noble du groupe VIIIB sous sa forme réduite. L'oxyde du métal du groupe IB ou IIB adsorbe ces impuretés soufrées et évite l'empoisonnement des sites actifs d'hydrogénation. Ces sites sont formés par le métal du groupe VIIIB sous sa forme réduite. De manière surprenante, l'ajout d'au moins un oxyde de métal du groupe IB ou IIB améliore la sélectivité du catalyseur.

L'invention concerne aussi le catalyseur obtenu à partir du procédé de préparation décrit ci-dessus.

Un autre objet de l'invention est l'utilisation du catalyseur selon l'invention ou du catalyseur obtenu par le procédé décrit ci-dessus dans une réaction de transformation de composés organiques. Ainsi, le catalyseur selon l'invention ou obtenu selon le procédé de l'invention peut être utilisé dans des réactions faisant intervenir des coupures ou des formations de liaisons carbone-carbone. Le catalyseur selon l'invention ou obtenu selon le procédé de l'invention permet une hydrogénation sélective des composés comprenant au moins une fonction acétylénique, diénique et/ou alkénylaromatique.

Les conditions opératoires utilisées pour ces réactions sont les suivantes : une température comprise entre 0 et 500°C, de préférence entre 25 et 350°C, une pression comprise entre 0,1 et 20 MPa, de préférence entre 0,1 et 10 MPa, une vitesse volumique horaire (V.V.H.) comprise entre 0,1 et 50 h⁻¹, de préférence entre 0,5 et 30 h⁻¹ pour une charge liquide; et entre 500 et 30 000 h⁻¹, de préférence entre 500 et 15 000 h⁻¹ pour une charge gazeuse. Lorsque l'hydrogène est présent, le rapport volumique d'hydrogène sur la charge est compris entre 1 et 500 litres par litre, de préférence entre 10 et 250 litres par litre.

La mise en oeuvre du catalyseur selon l'invention ou préparé selon le procédé de l'invention et les conditions de son utilisation sont à adapter par l'utilisateur à la réaction et à la technologie utilisée. En général, la mise en oeuvre est réalisée par injection de la charge hydrocarbonée à traiter et de l'hydrogène dans au moins un réacteur contenant ledit catalyseur, le réacteur étant à lit fixe, à lit mobile ou à lit bouillonnant, de manière préférée dans un réacteur à lit fixe. La totalité de ladite charge est préférentiellement injectée à l'entrée du réacteur où se produit la réaction d'hydrogénation sélective. Toutefois, il peut être avantageux, dans certains cas, d'injecter une fraction ou la totalité de ladite charge entre deux lits catalytiques consécutifs placés dans ledit réacteur. Ce mode de réalisation permet notamment de continuer à maintenir le réacteur opérationnel même lorsque l'entrée dudit réacteur se trouve bouchée par dépôts de polymères, de particules ou de gommes présentes dans ladite charge.

Le procédé d'hydrogénation sélective comprend la mise en contact d'une charge hydrocarbonée comprenant au moins un composé polyinsaturé avec le catalyseur selon l'invention ou obtenu selon le procédé décrit ci-dessus. Ladite charge hydrocarbonée comprend au moins un composé polyinsaturé et des impuretés soufrées. De préférence, ladite charge hydrocarbonée est une essence de pyrolyse. L'essence de pyrolyse correspond à une coupe dont la température d'ébullition est généralement comprise entre 0°C et 250°C, de préférence entre 10°C et 220°C. Cette charge comprend généralement la coupe C5-C12 avec des traces de composés en C3, C4, C13, C14, C15 (par exemple entre 0,1 et 3% poids pour chacune de ces coupes). Par exemple, une charge formée d'essence de pyrolyse a généralement une composition en % poids suivante : 8 à 12 % poids de paraffines, 58 à 62 % poids de composés aromatiques, 8 à 10 % poids de mono-oléfines, 18 à 22 % poids de dioléfines et de 20 à 300 ppm poids de soufre (partie part million), l'ensemble des composés formant 100%.

Les impuretés soufrées peuvent être des composés soufrés tels que l'H2S, le COS, des mercaptans ou des composés thiophéniques qui désactivent les catalyseurs d'hydrogénation sélective.

Dans le cas d'une hydrogénation sélective d'essence de pyrolyse, le ratio molaire (hydrogène)/(composés polyinsaturés à hydrogéner) est généralement compris entre 1 et 2, la température est généralement comprise entre 40°C et 200°C, de préférence entre 50 et 180°C, la V.V.H. est comprise généralement entre 0,5 h⁻¹ et 50 h⁻¹, de préférence entre 1 h⁻¹ et 30 h⁻¹ et la pression est généralement comprise entre 1,0 MPa et 6,5 MPa, de préférence entre 2,0 MPa et 3,5 MPa. Le débit d'hydrogène est ajusté afin d'en disposer en quantité suffisante pour hydrogéner théoriquement l'ensemble des composés polyinsaturés et de maintenir un excès d'hydrogène en sortie de réacteur. Afin de limiter le gradient de température dans le réacteur, il peut être avantageux de recycler une fraction de l'effluent à l'entrée et/ou au milieu du réacteur.

L'invention est illustrée par les exemples suivants qui ne présentent, en aucun cas, un caractère limitatif.

### EXEMPLES :

Dans les exemples qui suivent, la surface spécifique du support est mesurée par la méthode BET (norme ASTM D3663). Le volume poreux est mesuré par porosimétrie au mercure selon la norme ASTM D4284-92 avec un angle de mouillage de 140°.

### Exemple 1 : Catalyseur A (non conforme à l'invention)

Une solution aqueuse de nitrate de palladium Pd(NO₃)₂ est préparée par dilution de 6,51 g d'une solution aqueuse de nitrate de palladium Pd(NO₃)₂ contenant 10% poids de nitrate de palladium et 10% poids d'acide nitrique (Aldrich) avec de l'eau déminéralisée. Le volume total de la solution aqueuse préparée correspond au volume poreux du support.

Cette solution est ensuite imprégnée sur 100,02 g d'une alumine dont la surface spécifique est de 200 m²/g et le volume poreux de 0,52 ml/g. Cette alumine est sous forme d'extrudés dont le diamètre moyen est de 1,2 mm.

Le catalyseur A obtenu est séché sous air à 120°C, puis est calciné pendant 2 heures à 350°C sous un flux d'air avec un débit de 1 l.h⁻¹.(g de catalyseur)⁻¹.

Le catalyseur A contient 0,3 % poids de Pd par rapport au poids total du catalyseur.

### Exemple 2 : Catalyseur B (non conforme à l'invention)

Une solution aqueuse de nitrate de cuivre Cu(NO₃)₂ est préparée par dilution de 3,75 g de nitrate de cuivre hydraté (Aldrich) et 5 ml d'une solution d'acide nitrique à 1.10⁻³ mol/l avec de l'eau déminéralisée. Le volume total de la solution aqueuse préparée correspond au volume poreux du support.

Cette solution est ensuite imprégnée sur 97,30 g d'une alumine dont la surface spécifique est de 200 m²/g et le volume poreux de 0,52 ml/g. Cette alumine est sous forme d'extrudés dont le diamètre moyen est de 1,2 mm.

Le support promu obtenu est séché sous air à 120°C, puis est calciné pendant 2 heures à 350°C sous un flux d'air avec un débit de 1 l.h⁻¹.(g de catalyseur)⁻¹.

Une solution aqueuse de nitrate de palladium Pd(NO₃)₂ est préparée par dilution de 6,50 g d'une solution aqueuse de nitrate de palladium Pd(NO₃)₂ contenant 10% poids de nitrate de palladium et 10% poids d'acide nitrique (Aldrich), avec de l'eau déminéralisée. Le volume total de la solution aqueuse préparée correspond au volume poreux du support promu.

Cette solution est ensuite imprégnée sur le support d'alumine promu préparé précédemment.

Le catalyseur B obtenu est séché sous air à 120°C, puis est calciné pendant 2 heures à 350°C sous un flux d'air avec un débit de 1 I.h⁻¹.(g de catalyseur)⁻¹. Le catalyseur B contient 0,3% poids de Pd et 1,33% poids de CuO par rapport au poids total du catalyseur.

### Exemple 3 : Catalyseur C (conforme)

Une solution aqueuse de nitrate de zinc Zn(NO₃)₂ est préparée par dilution de 8,92 g de nitrate de zinc hexahydraté (Aldrich) et 5 ml d'une solution d'acide nitrique à 1.10⁻⁴ mol/l avec de l'eau déminéralisée. Le volume total de la solution aqueuse préparée correspond au volume poreux du support.

Cette solution est ensuite imprégnée sur 97,25 g d'une alumine dont la surface spécifique est de 200 m²/g et le volume poreux de 0,52 ml/g. Cette alumine est sous forme d'extrudés dont le diamètre moyen est de 1,2 mm.

Le support promu obtenu est séché sous air à 120°C, puis est calciné pendant 2 heures à 350°C sous un flux d'air avec un débit de 1 l.h⁻¹.(g de catalyseur)⁻¹.

Une solution aqueuse de nitrate de palladium Pd(NO₃)₂ est préparée par dilution de 6,52 g d'une solution aqueuse de nitrate de palladium Pd(NO₃)₂ contenant 10% poids de nitrate de palladium et 10% poids d'acide nitrique (Aldrich), avec de l'eau déminéralisée. Le volume total de la solution aqueuse préparée correspond au volume poreux du support promu.

Cette solution est ensuite imprégnée sur le support d'alumine promu préparé précédemment.

Le catalyseur C obtenu est séché sous air à 120°C, puis est calciné pendant 2 heures à 350°C sous un flux d'air avec un débit de 1 I.h⁻¹.(g de catalyseur)⁻¹. Le catalyseur C contient 0,3 % poids de Pd et 2,6 % poids de ZnO par rapport au poids total du catalyseur.

### Exemple 4 : Catalyseur D (conforme)

Une solution aqueuse de nitrate de zinc Zn(NO₃)₂ est préparée par dilution de 39,20 g de nitrate de zinc hexahydraté (Aldrich) et 5 ml d'une solution d'acide nitrique à 1.10⁻⁴ mol/l avec de l'eau déminéralisée. Le volume total de la solution aqueuse préparée correspond au volume poreux du support.

Cette solution est ensuite imprégnée sur 78,19 g d'une alumine dont la surface spécifique est de 200 m²/g et le volume poreux de 0,52 ml/g. Cette alumine est sous forme d'extrudés dont le diamètre moyen est de 1,2 mm.

Le support promu obtenu est séché sous air à 120°C, puis est calciné pendant 2 heures à 350°C sous un flux d'air avec un débit de 1 l.h⁻¹.(g de catalyseur)⁻¹.

La première imprégnation est répétée de la même manière avec cette fois 36,94 g de nitrate de zinc hexahydraté.

Une solution aqueuse de nitrate de palladium Pd(NO₃)₂ est préparée par dilution de 6,50g d'une solution aqueuse de nitrate de palladium Pd(NO₃)₂ contenant 10% poids de nitrate de palladium et 10% poids d'acide nitrique (Aldrich), avec de l'eau déminéralisée. Le volume total de la solution aqueuse préparée correspond au volume poreux du support promu.

Cette solution est ensuite imprégnée sur le support d'alumine promu préparé précédemment.

Le catalyseur D obtenu est séché sous air à 120°C, puis est calciné pendant 2 heures à 350°C sous un flux d'air avec un débit de 1 I.h⁻¹.(g de catalyseur)⁻¹.Le catalyseur D contient 0,3 % poids de Pd et 20,85 % poids de ZnO par rapport au poids total du catalyseur.

### Exemple 5 : Catalyseur E (conforme)

Une solution aqueuse de nitrate de cuivre Cu(NO₃)₂ est préparée par dilution de 30,70 g de nitrate de cuivre hydraté (Aldrich) et 5 ml d'une solution d'acide nitrique à 1.10⁻³mol/l avec de l'eau déminéralisée. Le volume total de la solution aqueuse préparée correspond au volume poreux du support.

Cette solution est ensuite imprégnée sur 88,93 g d'une alumine dont la surface spécifique est de 200 m²/g et le volume poreux de 0,52 ml/g. Cette alumine est sous forme d'extrudés dont le diamètre moyen est de 1,2 mm.

Le support promu obtenu est séché sous air à 120°C, puis est calciné pendant 2 heures à 350°C sous un flux d'air avec un débit de 1 I.h⁻¹.(g de catalyseur)⁻¹.

Une solution aqueuse de nitrate de palladium Pd(NO₃)₂ est préparée par dilution de 6,51 g d'une solution aqueuse de nitrate de palladium Pd(NO₃)₂ contenant 10% poids de nitrate de palladium et 10% poids d'acide nitrique (Aldrich), avec de l'eau déminéralisée. Le volume total de la solution aqueuse préparée correspond au volume poreux du support promu.

Cette solution est ensuite imprégnée sur le support d'alumine promu préparé précédemment.

Le catalyseur E obtenu est séché sous air à 120°C, puis est calciné pendant 2 heures à 350°C sous un flux d'air avec un débit de 1 I.h⁻¹.(g de catalyseur)⁻¹.Le catalyseur E contient 0,3% poids de Pd et 10,75% poids de CuO par rapport au poids total du catalyseur.

### Exemple 6 : Test catalytique en hydrogénation d'un mélange styrène isoprène en présence de composés soufrés.

Avant le test catalytique, les catalyseurs A, B, C, D et E sont traités sous un flux de un litre d'hydrogène par heure et par gramme de catalyseur avec une montée en température de 300°C/h et un palier à 150°C pendant 2 heures afin de réduire exclusivement sous forme métallique le palladium. On obtient ainsi des catalyseurs B, C, D et E promu par du palladium sous forme métallique et par de l'oxyde de zinc ou de l'oxyde de cuivre.

Les catalyseurs sont ensuite soumis à un test d'hydrogénation dans un réacteur discontinu parfaitement agité de type « Grignard ». Pour ce faire, 4 ml de catalyseur réduit sont fixés à l'abri de l'air dans un panier annulaire situé autour du mobile d'agitation. Les paniers utilisés dans les réacteurs sont de type Robinson Mahonnay.

L'hydrogénation est réalisée en phase liquide.

La composition de la charge est la suivante : 8% poids styrène, 8% poids isoprène, 262 ppm thiophène et trois teneurs différentes en pentanethiol et qsp 100% poids avec le solvant qui est du n-heptane. Les teneurs en pentanethiol testées sont 16 ppm, 32 ppm et 96 ppm (ppm: partie par million; qsp: quantité suffisante pour).

Le test est réalisé sous une pression constante de 3,5 MPa d'hydrogène et à une température de 45°C. Les produits de la réaction sont analysés par chromatographie en phase gazeuse.

Les activités catalytiques sont exprimées en moles de H₂ consommées par minute et par gramme de palladium.

On mesure également les sélectivités en formation d'oléfine par l'équation suivante : Sélectivité = %oléfines C5/(%oléfines C5 + %paraffine C5)x100. La sélectivité est mesurée à haute activité, c'est à dire lorsque 99,8% de l'isoprène a été converti et pour une charge dont la teneur en pentanethiol est de 32 ppm. Les résultats sont présentés dans le tableau 1.

**Tableau 1: Activités et sélectivités mesurées en hydrogénation d'un mélange styrène-isoprène en présence de composés soufrés**

| Catalyseurs | Activité catalytique (mole d'H₂ par minute par gramme de Pd) | | | Sélectivité en formation d'oléfine à 99,8 % conversion en isoprène (%) |
|---|---|---|---|---|
| | 16ppm pentanethiol | 32ppm pentanethiol | 96ppm pentanethiol | 32ppm pentanethiol |
| Catalyseur A (non conforme) | 1,30 | 0.98 | 0,06 | 90,1 |
| Catalyseur B (non conforme) | 0,42 | 0,04 | 0,03 | N.D. * |
| Catalyseur C | 2,10 | 1,44 | 0,52 | 97,7 |
| Catalyseur D | 2,29 | 1,43 | 0,61 | 98,7 |
| Catalyseur E | 4,49 | 2,94 | 1,30 | 92,6 |

| | | | | |
|---|---|---|---|---|
| * N.D. : Non mesurable car l'activité du catalyseur B est trop faible pour atteindre 99,8% de conversion de l'isoprène. | | | | |

Les catalyseurs C, D et E conformes à l'invention sont plus actifs et présentent des désactivations moins fortes lorsque la teneur en composé soufré augmente dans le milieux réactionnel par rapport aux catalyseurs A et B non conformes à l'invention. Les catalyseurs A et B subissent des désactivations de l'ordre de 95% lorsque la teneur en pentanethiol est de 96 ppm par rapport à une teneur à 16 ppm, alors que les catalyseurs C, D et E, subissent respectivement des désactivations de 75%, 73% et 71% lorsque la charge comprend 96 ppm de pentanethiol au lieu de 16 ppm.

Les sélectivités en formation d'oléfines pour les catalyseurs conformes à l'invention sont supérieures de 1,5 à 8,6% par rapport au catalyseur A non conforme pour une conversion en isoprène égale à 99,8%.

## Revendications

1. Catalyseur thiorésistant comprenant une phase active déposée sur un support, ladite phase active consistant en au moins un métal noble du groupe VIIIB sous forme réduite choisi parmi le platine ou le palladium et au moins 2 à 50 % poids d'un oxyde métallique du groupe IB ou du groupe IIB par rapport à la masse totale du catalyseur, ledit oxyde métallique étant choisi dans le groupe formé par l'oxyde de cuivre, l'oxyde de zinc et l'oxyde de cadmium, ledit support étant choisi parmi le groupe formé par les oxydes réfractaires, le charbon, les argiles, la silice-alumine et/ou leurs mélanges, et ledit support ayant une surface spécifique comprise entre 110 et 300 m²/g.

2. Catalyseur selon la revendication 1, dans lequel la teneur massique en oxyde métallique de groupe IB ou IIB par rapport à la masse totale du catalyseur supporté final est de préférence comprise entre 2,1% et 45% poids et de manière encore plus préférée et 2,5 et 30% poids.

3. Catalyseur selon l'une quelconque des revendications précédentes, dans lequel la teneur massique du métal noble du groupe VIIIB par rapport à la masse totale du catalyseur supporté final est comprise entre 0,01 et 2% poids, de préférence entre 0,05 et 1% poids.

4. Catalyseur selon l'une quelconque des revendications précédentes, dans lequel l'oxyde réfractaire est choisi dans le groupe formé par les oxydes de magnésium, d'aluminium, de silicium, de zirconium, de thorium, de titane et/ou leurs mélanges.

5. Procédé de fabrication d'un catalyseur thiorésistant selon l'une quelconque des revendications 1 à 4 comprenant les étapes suivantes :
1) préparation d'une solution aqueuse d'un précurseur d'un oxyde d'un métal du groupe IB ou IIB, ledit précurseur étant sous forme ionique,
2) incorporation de ladite solution obtenue à l'étape précédente sur un support choisi parmi le groupe formé par parmi le groupe formé par les oxydes réfractaires, le charbon, les argiles, la silice-alumine et/ou leurs mélanges,
3) séchage et calcination du support promu obtenu à l'étape précédente,
4) préparation d'une solution aqueuse d'un précurseur de métal noble du groupe VIIIB,
5) incorporation de ladite solution d'un précurseur de métal noble du groupe VIIIB sur le support promu, séché et calciné,
6) séchage, calcination du support obtenu à l'étape précédente,
7) réduction du catalyseur obtenu à l'étape (6), ladite étape de réduction étant effectuée in situ en présence d'un gaz réducteur et à une température comprise entre 80°C et 160°C.

6. Procédé selon la revendication 5, dans lequel le précurseur de l'oxyde du métal du groupe IB ou IIB est choisi parmi l'acétate de zinc, l'acétylacétonate de zinc, l'hydroxyde de zinc, le nitrate de zinc, l'oxalate de zinc ,le sulfate de zinc, l'acétate de cuivre, l'acétylacétonate de cuivre, le carbonate de cuivre, l'hydroxyde de cuivre, le nitrate de cuivre, le sulfate de cuivre, l'acétate de cadmium, l'acétylacétonate de cadmium, le carbonate de cadmium, l'hydroxyde de cadmium, le nitrate de cadmium et le sulfate de cadmium.

7. Procédé selon l'une quelconque des revendications 5 à 6, dans lequel le précurseur d'un métal noble du groupe VIIIB est un sel sélectionné dans le groupe constitué par le nitrate de palladium, le sulfate de palladium, l'acétate de palladium, l'acétylacétonate de palladium, le nitrate de platine, le sulfate de platine, l'acétate de platine et l'acétylacétonate de platine.

8. Procédé selon l'une quelconque des revendications 5 à 7 dans lequel, la solution aqueuse dudit précurseur d'un métal noble du groupe VIIIB est neutralisée par une base minérale sélectionnée dans le groupe constitué par les hydroxydes d'alcalins et les hydroxydes d'alcalino-terreux.

9. Utilisation du catalyseur selon les revendications 1 à 4 pour une hydrogénation sélective des composés comprenant au moins une fonction acétylènique, diénique et/ou alkénylaromatique.

## Patentansprüche

1. Schwefelresistenter Katalysator umfassend eine auf einem Träger abgeschiedene aktive Phase, wobei die aktive Phase aus wenigstens einem Edelmetall der Gruppe VIIIB in reduzierter Form besteht, ausgewählt aus Platin oder Palladium und aus mindestens 2 - 50 Gew.-% eines metallischen Oxides der Gruppe IB oder der Gruppe IIB im Verhältnis zur Gesamtmasse des Katalysators, wobei das Metalloxid aus der Gruppe ausgewählt ist, gebildet durch die Zinnoxide, die Zinkoxide und die Cadmiumoxide, wobei das Trägermaterial aus der Gruppe gewählt ist, gebildet durch die refraktären Oxide, den Kohlenstoff, die Tonen, Silica-Alumina und/oder deren Mischungen, und wobei der Träger eine spezifische Oberfläche zwischen 110 - 300 m²/g aufweist.

2. Katalysator nach Anspruch 1, bei dem der Massengehalt an metallischen Oxiden der Gruppe IB oder IIB im Verhältnis zur Gesamtmasse des finalen, geträgerten Katalysators vorzugsweise zwischen 2,1 Gew.-% und 45 Gew.-% beträgt und bevorzugt zwischen 2,5 und 30 Gew.-%.

3. Katalysator nach einem der vorhergehenden Ansprüche, bei dem der Massegehalt das Edelmetalles der Gruppe VIIIB im Verhältnis zur geträgerten finalen Gesamtmasse des Katalysators zwischen 0,01 und 2 Gew.-% beträgt, vorzugsweise zwischen 0,05 und 1 Gew.-%.

4. Katalysator nach einem der vorhergehenden Ansprüche, bei dem das refraktäre Oxid ausgewählt ist aus der Gruppe gebildet durch die Oxide von Magnesium, Aluminium, Silizium, Zirkon, Thorium, Titan und/oder deren Mischungen.

5. Verfahren zur Herstellung eines schwefelresistenten Katalysators nach einem der vorhergehenden Ansprüche 1 - 4 umfassend die folgenden Schritte:
1) Herstellung einer wässrigen Lösung eines Vorgängers eines Metalloxides der Gruppe IB oder IIB, wobei der Vorgänger in ionischer Form vorliegt,
2) Einarbeiten der in dem vorherigen Schritt erhaltenen Lösung auf einen Träger ausgewählt aus der Gruppe gebildet durch die refraktären Oxie, Kohlenstoff, Tone, Silica-Alumina und/oder deren Mischungen,
3) Trocknen und Kalzinieren des im vorherigen Schritt erhaltenen verarbeiteten Katalysators,
4) Herstellen einer wässrigen Lösung eines Vorläufers des Edelmetalls der Gruppe VIIIB,
5) Einarbeiten dieser Lösung eines Vorläufers des Edelmetalls der Gruppe VIIIB auf den verarbeiteten, getrockneten und kalzinierten Träger,
6) Trocknung, Kalzinierung des im vorherigen Schritt erhaltenen Trägers,
7) Reduktion des Katalysators aus Schritt (6), wobei die Reduktionsstufe in situ durchgeführt wird in Gegenwart eines Reduktionsgases und bei einer Temperatur zwischen 80°C und 160°C.

6. Verfahren nach Anspruch 5, bei dem der Vorgänger des Metalloxides der Gruppe IB oder IIB ausgewählt ist aus Zinkacetat, Zinkacetylacetonat, Zinkhydroxid, Zinknitrat, Zinkoxalat, Zinksulfat, Zinnacetat, Zinnacetylacetonat, Zinncarbonat, Zinnhydroxid, Zinnnitrat, Zinnsulfat, Cadmiumacetat, Cadmiumacetylacetonat, Cadmiumcarbonat, Cadmiumhydroxid, Cadmiumnitrat und Cadmiumsulfat.

7. Verfahren nach einem der Ansprüche 5 bis 6, dem der Vorgänger des Edelmetalles der Gruppe VIIIB ein Salz ist, ausgewählt aus der Gruppe gebildet durch Palladiumnitrat, Palladiumsulfat, Palladiumacetat, Palladiumacetylacetonat, Platinnitrat, Platinsulfat, Platinacetat und Platinacetylacetonat.

8. Verfahren nach einem der Ansprüche 5 bis 7, bei dem die wässrige Lösung des Edelmetallvorgängers der Gruppe VIIIB neutralisiert wird durch eine Mineralbase ausgewählt aus der Gruppe gebildet durch die Alkalihydroxide und die Erdalkalihydroxide.

9. Verwendung des Katalysators nach einem der Ansprüche 1 bis 4 für eine selektive Hydrogenierung von Verbindungen umfassend wenigstens eine acetylenische, dienische und/oder alkenylaromatische Funktion.

## Claims

1. A thioresistant catalyst comprising an active phase deposited on a support, said active phase consisting of at least one noble metal from group VIIIB in metallic form selected from platinum and palladium and at least 2% to 50% by weight of a metallic oxide from group IB or from group IIB with respect to the total catalyst weight, said metallic oxide being selected from the group formed by copper oxide, zinc oxide and cadmium oxide, said support being selected from the group formed by refractory oxides, coal, clays, silica-alumina and/or their mixtures, and said support having a specific surface area in the range 110 to 300 m²/g.

2. A catalyst according to claim 1, in which the quantity by weight of metallic oxide from group IB or IIB with respect to the total mass of the final supported catalyst is preferably in the range 2.1% to 45% by weight, and more preferably in the range 2.5% to 30% by weight.

3. A catalyst according to any one of the preceding claims, in which the quantity by weight of noble metal from group VIIIB with respect to the total mass of the final supported catalyst is in the range 0.01 % to 2% by weight, preferably in the range 0.05% to 1% by weight.

4. A catalyst according to any one of the preceding claims, in which the refractory oxide is selected from the group formed by oxides of magnesium, aluminium, silicon, zirconium, thorium, titanium and/or their mixtures.

5. A process for preparing a thioresistant catalyst according to any one of claims 1 to 4, comprising the following steps:
1) preparing an aqueous solution of a precursor of an oxide of a metal from group IB or IIB, said precursor being in the ionic form;
2) incorporating said solution obtained in the preceding step onto a support selected from the group formed by refractory oxides, coal, clays, silica-alumina and/or their mixtures;
3) drying and calcining the promoted support obtained in the preceding step;
4) preparing an aqueous solution of a precursor of the noble metal from group VIIIB;
5) incorporating said solution of a precursor of the noble metal from group VIIIB into the promoted, dried and calcined support;
6) drying, calcining the support obtained in the preceding step;
7) reducing the catalyst obtained in step 6), the reduction step is carried out in situ in the presence of a reducing gas and at a temperature in the range 80°C to 160°C.

6. A process according to claim 5, in which the precursor of the oxide of the metal from group IB or IIB is selected from zinc acetate, zinc acetylacetonate, zinc hydroxide, zinc nitrate, zinc oxalate, zinc sulphate, copper acetate, copper acetylacetonate, copper carbonate, copper hydroxide, copper nitrate, copper sulphate, cadmium acetate, cadmium acetylacetonate, cadmium carbonate, cadmium hydroxide, cadmium nitrate and cadmium sulphate.

7. A process according to claim 5 or claim 6, in which the precursor of a noble metal from group VIIIB is a salt selected from the group constituted by palladium nitrate, palladium sulphate, palladium acetate, palladium acetylacetonate, platinum nitrate, platinum sulphate, platinum acetate and platinum acetylacetonate.

8. A process according to any one of claims 5 to 7, in which the aqueous solution of said precursor of a noble metal from group VIIIB is neutralized by a mineral base selected from the group constituted by alkali hydroxides and alkaline-earth hydroxides.

9. Use of a catalyst according to claims 1 to 4 for selectively hydrogenating compounds comprising at least one acetylenic, dienic and/or alkenylaromatic function.
